# EUROPEAN PATENT APPLICATION

(11) **EP 4 495 865 A1**
(43) Date of publication of application: **22.01.2025**
(21) Application number: 23186511.4
(22) Date of filing: 19.07.2023
(51) Int. Cl.: G06Q 30/0601, G06Q 50/18, G06Q 20/22, H04L 9/00

(54) **A SYSTEM FOR A WEB PLATFORM MARKETPLACE OF GOODS AND SERVICES INCLUDING A SETTLEMENT/ARBITRATION ALGORITHM AND USING BLOCKCHAIN TECHNOLOGY**

(71) Applicant: Viflux Intermed Srl, 030605 Bucharest (RO)
(72) Inventor: Peretto, Marco, 051192 Bucharest (RO); Siligoni, Paolo, 68030 Chiasso (CH)
(74) Representative: Metroconsult Srl

(57) **Abstract**

A system for Web platform marketplace of goods and services, characterized by a novel settlement/arbitration algorithm that increases transactions' fairness and preserves both purchaser's and vendor's rights.

Purchaser can acquire credits from platform and use credits to buy goods/service, with reciprocal rating. If purchaser acknowledges he received what agreed, credits are transferred to vendor; otherwise settlement/arbitration process is started and will define the dispute in a short and well defined maximum time.

Transactions can be supported by blockchain technology with related advantages.

Platform can allow the credits usable for transactions to be converted in a proprietary crypto currency.

## Description

### Background of the invention

So many transactions simply do not happen because of lack of trust among the Parties. If the good/service is paid in advance, the vendor can provide something well below the agreement, or simply do not provide anything. If the good/service is paid at the end, the buyer cannot pay claiming false defects or simply closing communications and disappearing. If payments is on steps, the problem is split or divided but it remains present. Recurring in Court is expensive and it takes very long for a solution.

### Prior art

Several form of guarantees are used to allow transactions, from the Escrow agents to Letter of Credit and many others, but all are expensive and/or complicated.

While several web marketplace platforms (including Amazon, Alibaba etc..) guarantee that the goods will be exactly as ordered or the buyer will get the money back, we have not found platforms that allow the same safety for services, at least not with a well defined semi-automated settlement and arbitration algorithm set to solve disputes.

Especially when vendor and buyer do not know physically each other several transaction will not even be considered: for example a software bug will not be fixed by an unknown person thousands km far away, even if the internet does not make difference between 10m and 10.000 km distance. When a parent buys a private lesson of Homeric Greek for his child, the web Platform cannot guarantee that the child will learn; Platform can guarantee that when the lesson will be held, the teacher will be paid.

Blockchain is a recent technology characterized by Distributed Ledger technology DLT, immutability of the Ledger, transparency and traceability , cryptography safety. The use of Blockchain technology for an open digital marketplace is not very diffused yet and it is innovative in the way we are applying it to our platform.

### Description of the invention

This patent discloses and claims a useful, novel, and unobvious invention for Web platform marketplace of goods and services, characterized by a settlement/arbitration algorithm with the possibility of using blockchain technology for transactions.

The fully automated settlement algorithm shows to the Parties of the transaction what they agreed, obliging them to describe what in each point of view does not match or vice versa; maximum time for reciprocal answer is clearly set and automatically reminded to the Parties. In case one Party does not respond on time, Platform will consider that he tacitly accepts the other Party rightfulness. Parties can reach an agreement different from the initial one; in case of no agreement, it is possible to recur to the human arbitration that is bonded on what initially agreed and on communications/descriptions made inside the Platform by the Parties during settlement phase.

This patent presents an innovative, practical, and non-obvious invention for a web-based marketplace platform for goods and services. This invention is defined by a settlement/arbitration algorithm, which offers the flexibility of implementing blockchain technology for transaction processes.

The automated and trust settlement algorithm displays to the transaction Parties the details of their agreement, requiring them to specify any areas of disagreement or conformity, from their respective viewpoints. A strict timeframe for reciprocal responses is established and automatically prompted to the Participants. If a Party does not respond within this timeframe, the platform will interpret this as tacit acceptance of the other Party's position.

The Parties have the latitude to reach a settlement different from the initial agreement. In instances where consensus cannot be achieved, the system offers the option to resort to human arbitration. This arbitration is tethered to the initial agreement, to the possible new agreement reached during settlement process and to the communication/descriptions provided within the platform by the Parties during the settlement phase.

The utilization of blockchain technology in this model ensures transactional transparency and immutability.

### Transaction, settlement and arbitration

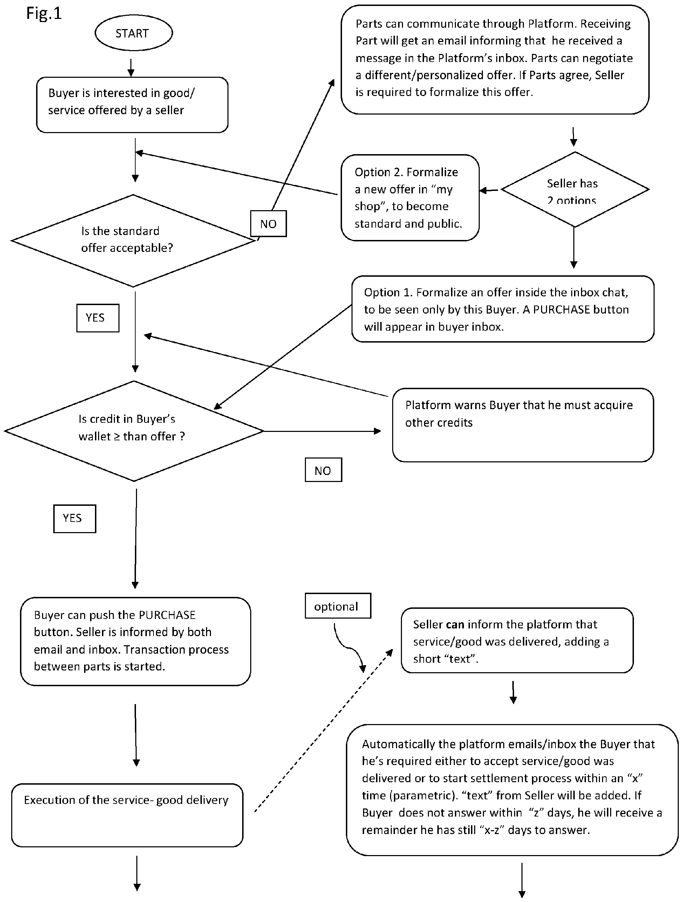

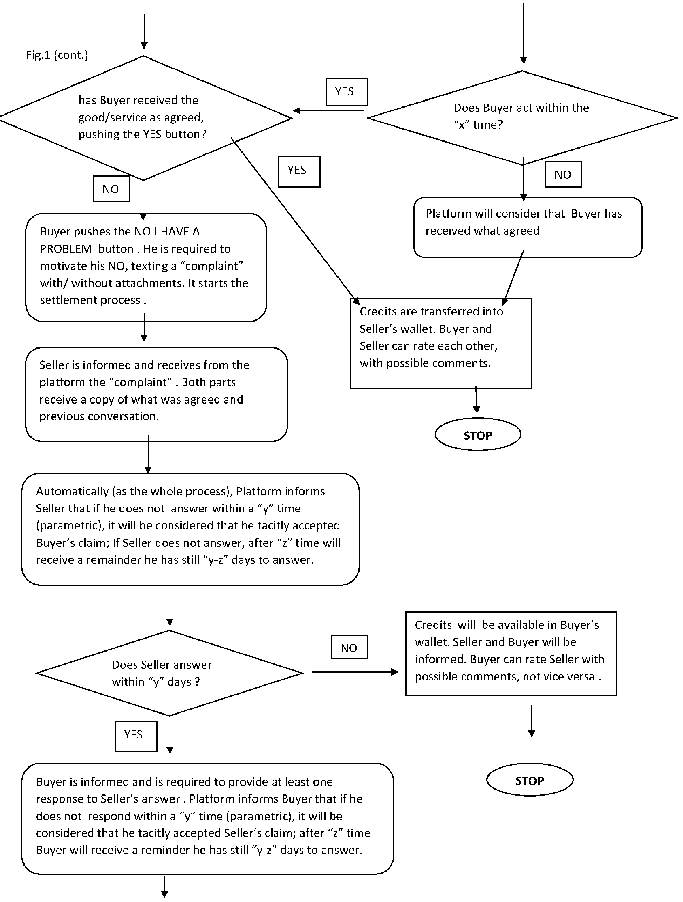

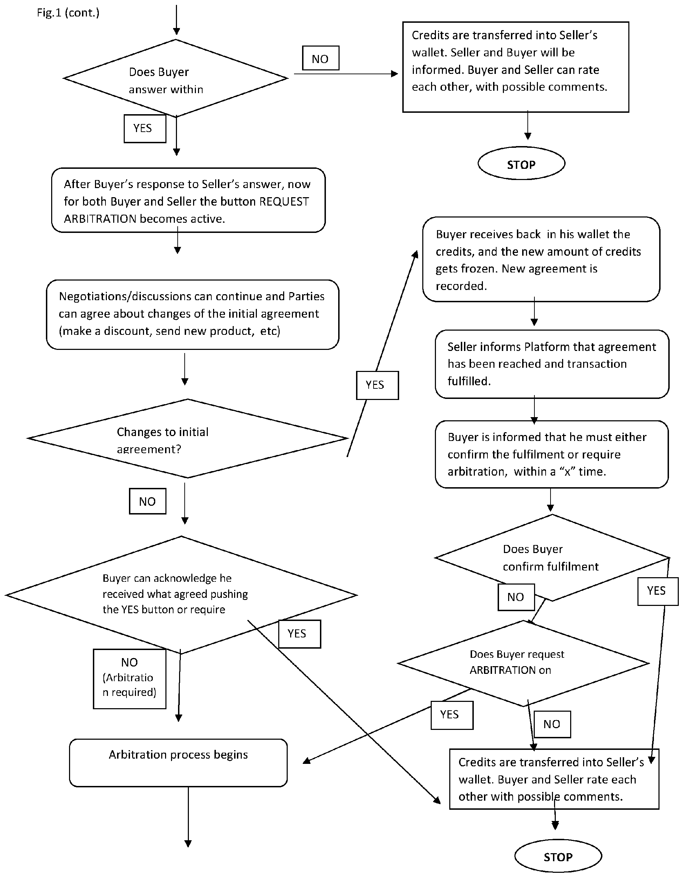

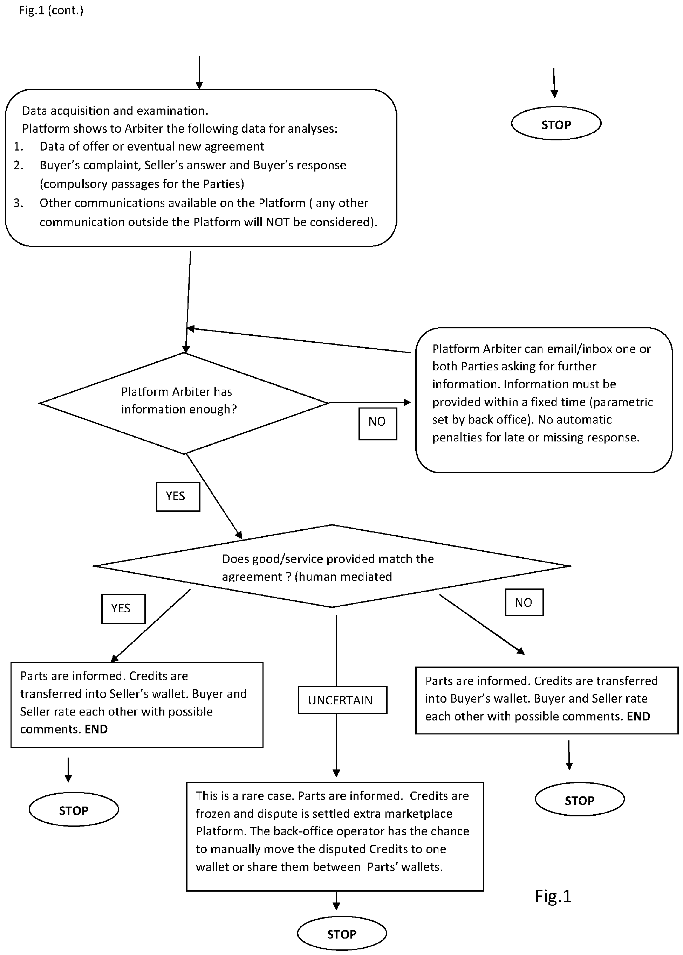

Transaction, settlement, arbitration process is described in detail in the algorithm presented in Fig. 1

### A. Transaction

The Platform hosts a marketplace where *Buyers and Sellers* use the Platform's credit as a means of exchange in order to complete transactions. In this context, the platform allows the credit exchange only when both *Seller and Buyers* are compliant with all the required conditions for the transaction by modulating disputes through a settlement and arbitration algorithm. The system allows the conversion of transaction Credits into a national currency or into a corresponding specified cryptocurrency.

Once the good/service to be purchased has been identified based on the active offers available in the system, the *Buyer* can select the offer of interest by opening the offer detail sheet. In this detail sheet, in addition to the information relating to the goods/service, the *Buyer* can decide the purchase action by pressing the relevant button or go back and continue with his search.

Parties can negotiate and agree on a different/personalized offer, as described more in details in the algorithm.

After good/service has been supplied by the Seller, the latter can inform the platform that the good/service has been delivered through a specific button and can add a note. Following this action, the platform will send an email to the *Buyer* urging them to close the deal or to start the settlement process as described in the algorithm. After the "x" parametric time, the *Buyer's* consent will be considered implied and the sales process will be closed.

### B. Settlement

If Buyer considers he has not received the good/service according to the agreed terms, he can initiate a complaint and start the negotiation in which Parties explains their motivations and try to solve the dispute by reaching an agreement. This process, called *Settlement Process*, ensures communication between the Parties without platform interference.

Buyer is required to motivate his "No, I have a problem", texting a "complaint" with/without attachments. It starts the settlement process.

Seller is required to answer within a fixed time and Buyer to respond within a fixed time, with automatic scheduled reminders from the Platform; from this point on, Parties can either continue negotiation (as long as they consider and without time limits for answers) or can require arbitration. In case one Party does not respond on time, the Platform's system will consider that this Party tacitly accepts the other Party rightfulness.

Parties can agree about changes of the initial agreement (make a discount, send new product, modify or integrate the service etc); in this case Buyer receives back in his wallets the credits corresponding to the initial agreement, and the new amount of credits gets frozen. Buyer can acknowledge fulfilment of the new transaction or require arbitration, within a fixed time; in case Buyer will make no action will be consider implicit transaction fulfilment acknowledgement.

### C. Arbitration

*Buyer* or *Seller* may begin the arbitration process if and only if the Settlement process has not been concluded with an agreement and one of the Parties pushes the **Request arbitration** button.

Once enabled, the **Request Arbitration** button will be visible to both Seller and *Buyer.*

Before enabling the button, Platform's back-office can activate actions (separately or together):
It can be activated a pop-up informing that if arbitration is requested, the losing Party will have to pay a fee (parametric established by the back-office). In this case, whoever wants to access the arbitration must freeze a credit equivalent to the fee. If the User requesting arbitration does not have enough credit, he will have to top up his wallet. If the applicant wins the arbitration, the Platform will automatically transfer the frozen credits to the applicant's wallet, the back-office will manually transfer the equivalent of the arbitration fee.

If the losing Party is not the User requesting arbitration , Platform cannot coercively withdraw his credit; therefore the above procedure refers. Other solutions will be taken in case the losing Party did not request arbitration. The credit freezing described above is a separate transaction to be tracked on the application. Therefore, like the sales process, there will be a reference to the "Arbitration Fee" transfer type.

Arbiter will receive from Platform a pre-set pack of information and he is allowed to ask questions to the Parties as described in the algorithm. No automatic penalties for late or missing response by Parties, even if proactivity and willingness to find a settlement will be positively considered. Arbiter cannot evaluate information other than what described before.

### Blockchain use

Blockchain has several features such as: decentralized Ledger, immutability of the Ledger, transparency and traceability (within an inside the blockchain), cryptography. The practical benefits for decentralized Ledger is that a dictator can change my real estate ownership from the cadastre Ledger and Notary archive, he cannot from the Blockchain. Furthermore once a block has been added it is possible to add new blocks but nobody and nothing can change what it has been done previously.

Blockchain technology is not new but we consider that Platform is innovative and it is innovative the way we are applying blockchain to the Platform. The system is versatile in its technological underpinning, as it can operate on either traditional digital technology or blockchain technology. Blockchain, in Particular, introduces an unprecedented level of transparency and security to the arbitration process. Every transaction is recorded on a decentralized, immutable ledger. This not only allows for complete traceability but also assures that no single Party can unilaterally alter or delete past transaction records. This unique feature of blockchain significantly enhances the reliability and trustworthiness of the system's arbitration mechanism. An additional strength of the system lies in its adaptability. The choice of technology, whether traditional or blockchain, can be determined by the administrator based on the specific requirements and constraints of the platform. This flexibility ensures that the system can be optimized for different contexts and can adapt to evolving technological landscapes. When the blockchain option is selected, the arbitration process benefits from enhanced transparency and verifiability. Blockchain's decentralized and immutable nature allows for an open review of transactions, which can be instrumental in resolving disputes fairly. This innovative use of blockchain technology in the arbitration process sets a new standard for dispute resolution in digital marketplaces, promoting trust and encouraging further platform engagement.

In the context of the settlement system only based on blockchain technology, stakeholders initially have the opportunity to seek dispute resolution directly within the decentralized blockchain network. Should this direct resolution fail, arbitration becomes the fallback. Alternatively, Parties may prefer to initiate the arbitration protocol directly, skipping the attempt at blockchain-based non-arbitrated resolution.

Upon receiving an arbitration demand, the arbitrator interacts with the blockchain by broadcasting an acceptance/decision transaction on-chain. The acceptance/transaction, once verified and added to the blockchain, indicates the arbitrator's acceptance of the subrogation claim, consequently delisting it from the pool of pending arbitration cases within the blockchain network.

In certain implementations, the claim lodged on the blockchain, which could be represented as a smart contract or a series of linked transactions in a UTXO (Unspent Transaction Output) model chain, is also validated by the Parties to the claim. This validation is indicated by the broadcast and recording of acceptance transactions after the arbitrator has cleared any conflict check, or obtained approval from the Parties.

The arbitration demand transaction within the blockchain can specify preference parameters for an arbitrator. This might include holding credentials from a recognized professional organization, having membership in a professional society, being whitelisted by the involved Parties, or possessing specific qualifications for deciding disputes in arbitration. This opens a door for independent, freelance arbitrators to Participate, as they can accept arbitration demands broadcasted on the network.

This is in contrast to traditional systems where arbitrators are typically tethered to a specific insurance entity for adjudication of non-Party cases. In such systems, an insurer submitting a Party case to arbitration is expected to provide an arbitrator to hear a non-Party case, while obtaining an arbitrator from another insurer unrelated to the arbitration of the submitted case.

By leveraging the immutability and transparency of blockchain technology, this innovative approach ensures data integrity and disseminates the arbitration process across multiple nodes, thereby enhancing the efficiency and fairness of dispute resolution.

The step-by-step breakdown is :
1. **Dispute Initiation**: Parties involved in the subrogation claim can initially try to resolve the dispute directly within the blockchain network. If this attempt fails, they can initiate the arbitration process. Alternatively, they can skip the direct resolution attempt and demand arbitration from the outset.
2. **Arbitration Demand**: The Parties demand arbitration by broadcasting a request transaction on the blockchain. This request can specify preference for an arbitrator with certain qualifications or credentials.
3. **Arbitrator Acceptance**: The arbitrator accepts the arbitration request by broadcasting an acceptance/decision transaction on-chain. This action marks the subrogation claim as accepted by the arbitrator and removes it from the pool of available arbitration cases on the blockchain.
4. **Claim Validation**: The subrogation claim, represented as a smart contract or linked transactions in a UTXO model chain, is validated by the involved Parties. Validation is indicated by the broadcast and recording of acceptance transactions on the blockchain after the arbitrator has cleared any conflict checks or obtained necessary approvals.
5. **Dispute Resolution**: The arbitrator resolves the dispute based on the information and rules available on the blockchain. The outcome is recorded as a new transaction on the blockchain.
6. **Transparency and Security**: Blockchain technology ensures that all transactions and decisions are transparent, immutable, and secure, enhancing the efficiency and fairness of the dispute resolution process.

This approach allows for a high degree of flexibility and transparency, with the potential for freelance arbitrators to Participate in the network. It also contrasts with traditional systems where arbitrators are typically employed by a specific entity and may be expected to handle cases not directly related to their employer.

The focus behind the UTXO model in our system is, that, these transaction outputs remain as "unspent" outputs until the owner uses them in a new transaction. At that point, they become "spent" transaction outputs and can no longer be used.

The Unspent Transaction Output (UTXO) model is a method used in some blockchains, most notably Bitcoin, for tracking the ownership of cryptocurrency. In the UTXO model, a transaction output is created whenever a transaction takes place, and these outputs represent a certain amount of cryptocurrency.

Each transaction output can only be used once and the whole amount in this output must be used in the transaction. When you want to make a transaction, you choose a number of UTXOs you control, which together make up an amount that covers the transaction value. If the total value of the selected UTXOs is more than you want to spend, the transaction will also include a "change" output that sends the difference back to you.

Now, in the context of an arbitration system, there are several advantages to using a UTXO model:
**Transparency**: Since every transaction output is recorded on the blockchain, it's easy for any Party to trace the history of a transaction. This transparency can help in dispute resolution, as Parties can verify the entire history of transactions related to the dispute.
**Security**: Because UTXOs can only be spent by the owner of the private key, it provides security for the transactions. This can ensure that only the rightful Parties are involved in the resolution of a dispute.
**Scalability**: The UTXO model can potentially offer greater scalability for handling multiple disputes simultaneously. Each transaction is independent, and they can be processed in parallel. This can make the arbitration process more efficient when dealing with a high volume of cases.
**Immutability**: Once a transaction is recorded on the blockchain, it cannot be changed. This immutability is especially useful in an arbitration context, as it ensures that once a decision has been made and recorded, it cannot be altered or deleted. This provides assurance to all Parties that the arbitration process is fair and final.

In our system based on UTXO, the 'ScriptPubKey' field can be leveraged to incorporate conditions that must be met for the transaction to be considered valid or completed in the settlement.

The 'ScriptPubKey' is essentially a cryptographic puzzle that requires a solution to allow the transaction to proceed. In the most common use case, this puzzle ensures that only the owner of the private key associated with (for example) the Bitcoin address can spend the UTXOs.

To apply this concept in a settlement/arbitration system, we can use a multi-signature ('multisig') script, which requires signatures from multiple Parties for the transaction to be valid.

For instance, consider a scenario where we have a buyer, a seller, and an arbitrator. You could set up a '2-of-3 multisig' address, which would require any two of the three Participants' signatures to spend the UTXOs. This could be the buyer and the seller in case of a smooth transaction, or, if a dispute arises, the arbitrator could provide the second required signature after deciding in favour of one Party.

So, in a dispute scenario, the arbitrator reviews the case details, makes a decision, and then signs a transaction sending the disputed amount to the winning Party. The 'ScriptPubKey' of this transaction could be set up to require signatures from the arbitrator and the winning Party, thereby enforcing the arbitrator's decision.

This mechanism ensures a trustless and decentralized settlement/arbitration process. Every Participant has equal power, and the transparency of the blockchain ensures that the process is fair and can be audited.

This mechanism records all transactional activities, including initial agreement parameters, disagreements, resolutions, and arbitration outcomes, in an immutable and verifiable manner.

The system incorporates the Unspent Transaction Output (UTXO) model. In this model, each transaction is linked to a unique UTXO that distinctly signifies a specific amount of cryptocurrency. This serves as an ownership proof indicator and acts as a critical unit in the dispute resolution process.

The system ensures that the ScriptPubKey is configured to mandate a multi-signature requirement. This provision ensures that a predetermined number of Parties must authorize any arbitration outcome, thereby enhancing the fairness and security of the dispute resolution process.

The multi-signature requirement within the ScriptPubKey can be designed to necessitate the inclusion of signatures from the arbitrator, buyer, and seller. This facilitates a trustless and decentralized arbitration process.

By combining the UTXO model and the multi-signature requirement, the system is able to handle multiple disputes simultaneously, resulting in improved scalability and efficiency.

The blockchain-based settlement/arbitration system incorporates a mechanism for time-bound responses, with automatic notifications dispatched to the Participating Parties. This improves the timeliness and effectiveness of the dispute resolution process.

## Claims

1. A system for a web platform marketplace of goods and services that increases transactions' fairness and preserves both purchaser's and vendor's rights, comprising:
a) an automatic intervention of the settlement/arbitration algorithm in case of disputes, where the algorithm ensures fairness by adhering to preset terms and conditions.
b) a specific settlement algorithm in which if Buyer considering he has not received the good/service according to the agreed terms, Buyer can initiate a complaint and start the negotiation in which Parties explains their motivations and try to solve the dispute by reaching an agreement;
c) a settlement algorithm in which after a complaint, a Party's failure to respond within the specified timeframe is interpreted by the platform as an implicit acceptance of the opposing Party's position, leading to a swift resolution of disputes; credits will be moved accordingly
d) an arbitration algorithm made accessible to each Party only after compulsory passages and where human arbiter is guided by the system algorithm;

2. The system according to claim 1, that empowers transaction Parties with the ability to renegotiate and reach a settlement that deviates from the initial agreement, offering a flexible framework for dispute resolution, the buyer can accept or reject a seller's standard offer and the standard offer can be renegotiated between Parts and become a customized offer and/or a new standard public offer.

3. The system of claim 1 in which in case of accepting the offer (standard or customized) the system will check the credit in buyer's wallet, will warn the Buyer both via mail and platform inbox if the credit amount is lower than price, otherwise Parties are informed both via mail and platform inbox that the transactions process is started.

4. The system of claim 1 where the Seller can inform the platform that service/good was delivered and automatically the platform emails/inbox the Buyer that he's required either to recognize the transaction completion or to start settlement process within a fixed (parametric) time, with automatic scheduled reminders, in case Buyer does not answer within on time, the system considers that Buyer tacitly acknowledges Seller's statement and will move credits accordingly.

5. The system of claim 1, in which some or all processes including Settlement/Arbitration algorithm can operate using either traditional digital technology or blockchain technology, based on the administrator's choice, the system further including a human arbitration component that becomes accessible in situations where the automated resolution does not achieve consensus, the human arbitration component operates within the boundaries of the initial agreement and takes into consideration communication and descriptions furnished on the platform by the involved Parties during the resolution phase.

6. The system according to any one of claims from 1 to 5, wherein server providing the contract management and settlement and arbitrage service can be connected to a blockchain network with a p2p (peer-to-peer) connection to include the data of the agreement obligation, including the virtual currency and its amount, becoming a method to provide a P2P contract management service using a blockchain-based or non-blockchain-based virtual currency that is stored to be distributed among at least two or more public nodes.

7. The system according to claim 6 that endows involved Parties with the capacity to renegotiate the terms of the transaction, allowing them to reach a settlement that deviates from the initially encoded smart contract agreement.

8. The system of any one of claims 1 to 6, wherein (in both cases of traditional or blockchain technology) the web platform provides intuitive user interface tools to facilitate the management and use of credits, their conversion into ERC20 (or similar) tokens, this conversion increasing the versatility of the system, as these tokens can be traded on the open market, allowing users to take advantage of market fluctuations.

9. The system of any one of claims from 1 to 7, wherein the web platform includes a module for real-time tracking of the conversion rate between the credits and the ERC20 (or similar) token.

10. The system of any one claims 1 to 8, wherein the web platform provides a secure digital wallet for each user, facilitating the safe storage, usage, and conversion of credits and ERC20 (or similar) tokens.

11. The system of any one of claims from 1 to 9, wherein the cryptographic component of the blockchain is utilized to implement ScriptPubKey, a locking script that outlines the unique conditions that must be met for the UTXO to be expended or employed in the settlement/arbitration process.

12. The system of claim 6 that incorporates the Unspent Transaction Output (UTXO) model. In this model, each transaction is linked to a distinct UTXO that uniquely signifies a specific quantity of cryptocurrency.

13. The system as described in claim 6, wherein the ScriptPubKey is configured to mandate a multi-signature requirement, thereby ensuring that a predetermined number of Parties must grant authorization for any arbitration outcome.
